# EUROPÄISCHE PATENTANMELDUNG

(11) **EP 1 093 840 A2**
(43) Veröffentlichungstag der Anmeldung: **25.04.2001**
(21) Anmeldenummer: 00119528.8
(22) Anmeldetag: 07.09.2000
(51) Int. Cl.: B01D 29/21, B01D 29/96, B01D 35/147, B01D 35/153, B01D 35/16

(54) **Flüssigkeitsfilter mit Filterumgehungsventil**

(30) Priorität: 14.10.1999 DE 19949564
(71) Anmelder: Filterwerk Mann & Hummel GmbH, 71638 Ludwigsburg (DE)
(72) Erfinder: Turnbrink, Manfred, Dr., 64732 Bad König (DE)
(74) Vertreter: Voth, Gerhard, Dipl.-Ing.

(57) **Zusammenfassung**

Es wird ein Flüssigkeitsfilter vorgeschlagen, welches eine Rundfilterpatrone und ein Filterumgehungsventil aufweist, wobei der Ventilkörper im Stützrohr angebracht ist und sich der Ventilsitz im Deckel befindet. Hierbei soll eine einfach zu montierende Baugruppe entstehen, wobei auch beim Auswechseln der Filterpatrone Fehlermöglichkeiten ausgeschlossen werden sollen. Im übrigen soll die Filterpatrone unproblematisch in der Entsorgung sein. Dies wird dadurch gelöst, daß diese mit Endscheiben ausgestattet ist, welche sich auf den beiden Stutzen 24, 15 abstützt, was deren Materialbedarf verringert. Weiterhin kann das Stützrohr bleibend mit dem Deckel verbunden werden, so daß ein Verlieren oder falscher Einbau während des Patronenwechsels vollständig vermieden werden kann.

## Beschreibung

### Stand der Technik

Die Erfindung betrifft ein Flüssigkeitsfilter mit einer auswechselbaren Rundfilterpatrone und einem Filterumgehungsventil nach der Gattung des Patentanspruches 1 sowie des Patentanspruches 5.

Aus der DE 196 05 425 C2 ist ein solches Filter bekannt, In diesem Filter ist gehäusefest ein Stützrohr sowie ein Filterumgehungsventil, welches einen im Stützrohr befestigten Ventilkörper aufweist, vorgesehen. Über eine Feder wird dieser Ventilkörper auf einen Ventilsitz gedrückt, welcher als Teil der einen Endscheibe der eingesetzten Rundfilterpatrone des Filters ausgebildet ist. Auf diese Weise wird ein Filterumgehungsventil gebildet, welches in Abhängigkeit des am Filterelement vorliegenden Druckunterschiedes geöffnet und geschlossen wird. Wird ein solches Filter zum Beispiel für den Schmierölkreislauf einer Brennkraftmaschine verwendet, so wird durch Öffnen des Ventils bei Spitzenbelastungen des Motors oder im Falle eines Zusetzens der Rundfilterpatrone eine genügende Versorgung der Brennkraftmaschine mit Schmieröl gewährleistet.

Wird der Ventilsitz in der Endscheibe der Filterpatrone untergebracht, so hat dies jedoch den Nachteil, daß die Patrone auf die speziellen Einbaubedingungen in dem Filtergehäuse angepaßt werden muß. Dies erschwert eine Standardisierung der Patronenbaureihen und bedeutet einen zusätzlichen Materialaufwand für die austauschbaren Patronen, die am Ende ihrer Lebensdauer entsorgt werden müssen.

Man kann nun entsprechend der DE 298 15 023 den Ventilsitz in einer Adapterscheibe unterbringen, welche im Deckel montierbar ist. Hierdurch wird eine größere Flexibilität bezüglich der einsetzbaren Patronen erreicht, außerdem können diese hinsichtlich ihres Materialaufwandes optimiert werden. Nachteilig ist jedoch, daß durch den Adapter ein zusätzliches Bauteil anfällt, welches im Montageprozeß für den Filter beachtet werden muß. Hierdurch ergibt sich ein zusätzlicher Montageaufwand. Außerdem ergeben sich Fehlerquellen durch eventuelle Verwechslung von Adaptern bzw. deren falschen Einbau.

Der Erfindung liegt die Aufgabe zugrunde, ein Filter zu schaffen, das eine hohe Betriebssicherheit aufweist und dabei bei möglichst geringem Materialaufwand für Austauschteile leicht zu fertigen und zu montieren ist. Diese Aufgabe wird durch die Merkmale des Patentanspruches 1 sowie des Patentanspruches 5 gelöst.

### Vorteile der Erfindung

Das erfindungsgemäße Flüssigkeitsfilter besteht aus einem Gehäuse, welches mit einem Deckel versehen ist. In dem Gehäuse ist eine Rundfilterpatrone mit einem innen liegenden Stützrohr angeordnet. In dem Stützrohr ist ein Ventilkörper mit einem Spannmittel angebracht, wobei das Spannmittel, insbesondere eine Feder, den Ventilkörper auf einen Ventilsitz drückt. Auf diese Weise wird eine Umgehungsöffnung, welche die Reinseite des Filters mit einer Rohseite des Filters verbindet, verschlossen.

Erfindungsgemäß ist vorgesehen, daß der Ventilsitz nicht durch die eine Endscheibe der Rundfilterpatrone gebildet wird, sondern diese dichtend mit Gehäuseteilen oder dem Stützrohr verbunden ist. Diese korrespondierenden Dichtflächen können derart im Inneren der Rundfilterpatrone angeordnet sein, daß die Endscheiben der Rundfilterpatrone nur eine geringfügig größere Fläche aufweisen müssen als die Stirnseiten des Filtermediums. Dadurch wird der Materialaufwand für das Auswechselteil der Rundfilterpatrone minimiert. Dies bringt Vorteile für die Materialkosten der Rundfilterpatrone, welche ein Großserienteil ist, wodurch die Materialeinsparungen sich auf die Wirtschaftlichkeit des Filterbetriebs auswirken. Außerdem kann durch die beschriebene Rundfilterpatrone die Umweltbelastung bei der notwendigen Entsorgung, insbesondere der Verbrennung, minimiert werden.

Ein weiteres erfindungsgemäßes Merkmale besteht darin, daß das den Ventilsitz bildende Bauteil entweder unlösbar mit dem Deckel verbunden ist oder eine vormontierbare, festgefügte Einheit bildet, wobei das Stützrohr in dieser Einheit integriert ist. Daraus ergibt sich der wesentliche Vorteil, daß das den Ventilsitz bildende Bauteil bei der Endmontage des Filters oder dem Filterwechsel weder verlorengehen kann noch durch einen unsachgemäßen Einbau die Funktion des Filters beeinträchtigt werden kann. Insbesondere bei Austausch der Filterpatrone wird damit das Fehlerrisiko bei der Montage wesentlich vermindert. Dies ist von besonderer Bedeutung, weil ein Filterwechsel durch ungeschultes Personal nicht ausgeschlossen werden kann. Gerade in solchen Fällen können Zusatzbauteile, deren Zugehörigkeit zum Austauschteil oder Gehäuse nicht eindeutig zugeordnet werden kann, übersehen werden oder verlorengehen. Die Integration von Ventilsitz und/oder Stützrohr in einer Aufnahme im Deckel spart weiterhin den Fertigungsaufwand, der durch die Herstellung eines gesonderten Adapters entstehen würde. Auch dies trägt zu einer Erhöhung der Wirtschaftlichkeit des erfindungsgemäßen Flüssigkeitsfilters bei.

Eine besonders sichere Variante läßt sich dadurch erzeugen, daß der Ventilsitz an einem Hohlstutzen angebracht ist, der als Teil des Deckels ausgebildet ist. Dieser Hohlstutzen kann einteilig mit dem Deckel hergestellt werden, z. B. im Kernausschmelzverfahren. Eine andere Möglichkeit besteht darin, den Hohlstutzen mit dem Deckel bleibend zu verbinden, z. B. durch eine Schweißverbindung. Eine andere Möglichkeit besteht darin, den Hohlstutzen mit dem Deckel einteilig herzustellen, wobei der Hohlraum nicht durch das Kernausschmelzverfahren sondern durch einen mit dem Deckel verschweißten Verschluß gebildet wird. Es ergibt sich dadurch ein stabiles Bauteil, welches mit hoher Fertigungsgenauigkeit hergestellt werden kann und daher eine einwandfreie Funktion des Umgehungsventil gewährleistet.

Eine sinnvolle Ausgestaltung des Erfindungsgedankens sieht vor, den sehr stabilen Hohlstutzen gleichzeitig als Aufnahme für die deckelseitige Endscheiben der Rundfilterpatrone zu nutzen. Diese kann dann bei der Montage des Filters auf den Hohlstutzen im Deckel geschoben werden, wodurch eine zuverlässige Abdichtung entsteht. Weiterhin können Maßnahmen getroffen werden, um zu gewährleisten, daß bei einem Ausbau der Filterpatrone bei Aufschrauben des Deckels die Rundfilterpatrone in der Aufnahme im Deckel verbleibt und nicht durch den Stutzen im Gehäuse zurückgehalten wird. Dies ist insbesondere durch eine größere Flächenpressung an der deckelseitigen Endscheibe im Vergleich zur anderen Endscheibe zu erreichen oder durch eine leichte Hinterschneidung am Hohlstutzen, ähnlich wie dies bei Schlauchstutzen allgemein bekannt ist.

Wird das Stützrohr in den Deckel integriert, so bietet es sich an, dessen Außenseite als Aufnahme im Deckel für die Filterpatrone zu nutzen. Die Patrone kann auf einen verdickten Bereich des Stützrohrs geschoben werden, wobei dieser so gestaltet sein kann, daß die Montagekraft der Endscheibe in der deckelseitigen Aufnahme größer ist als die in der gehäuseseitigen Aufnahme. Dies läßt sich mit den bereits im Zusammenhang mit dem Hohlstutzen beschriebenen Maßnahmen erreichen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: ein Filter mit Rundfilterpatrone, welche auf einen Hohlstutzen im Deckel geschoben ist, im Mittelschnitt und
- Figur 2: ein Flüssigkeitsfilter, bei dem das Stützrohr in einer Aufnahme im Deckel integriert ist, im Mittelschnitt.

### Beschreibung der Ausführungsbeispiele

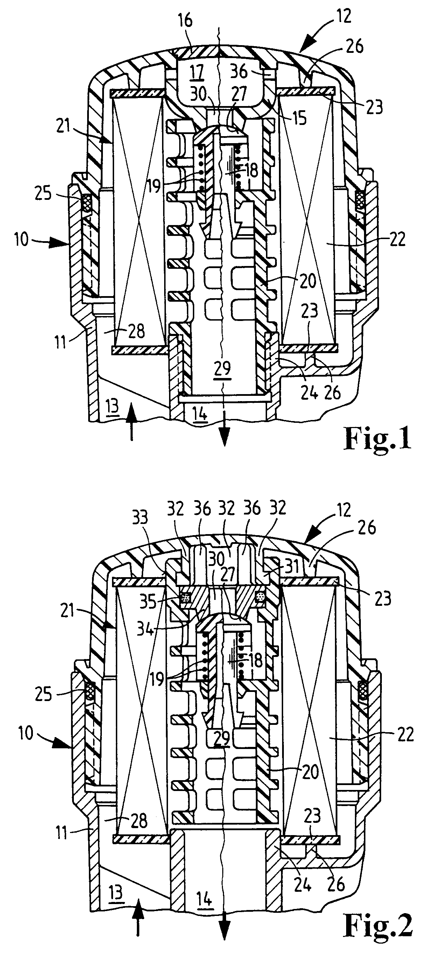

Das Filter gemäß Figur 1 weist ein Gehäuse 10 auf, welches aus einem Gehäusekörper 11 und einem Deckel 12 besteht. Ein Einlaß 13 und ein Auslaß 14 für das zu reinigende Fluid sind in den Gehäusekörper 11 integriert. Der Deckel 12 weist einen Hohlstutzen 15 auf, der mit dem Deckel eine verschweißte Einheit bildet. Dargestellt sind zwei Möglichkeiten der Verbindung. Es ist möglich, den Hohlstutzen 15 mit dem Deckel 12 einteilig herzustellen und mit einem Verschluß 16 zu verschweißen, so daß sich ein Hohlraum 17 bildet (linke Seite in Figur 1). Die andere Möglichkeit besteht darin, den Hohlstutzen als gesondertes Teil herzustellen und im Inneren des Deckels zu verschweißen (rechte Seite in Figur 1).

Die Montage des Filters erfolgt durch Einclipsen eines Ventilkörpers 18 unter Verwendung von Spannmitteln 19, hier einer Schraubenfeder, in einem Stützrohr 20, welches anschließend in den Auslaß 14 des Gehäusekörpers 11 eingeschraubt wird. Danach kann eine Rundfilterpatrone 21, welche ein sternförmig gefaltetes Filterpapier 22 mit stirnseitigen Endscheiben 23 aufweist, entweder auf den Hohlstutzen 15 oder auf einen Auslaßstutzen 24 geschoben werden. Durch Verschrauben des Gehäusekörpers 11 mit dem mit einem O-Ring 25 versehenen Deckel 12 wird das Filter zu einer Einheit zusammengefaßt, wobei das Filterelement auf die jeweils andere Aufnahme (Hohlstutzen 15, Auslaßstutzen 24) aufgeschoben und mit Hilfe von Axialanschlägen 26 fixiert wird. Dabei kommt der Ventilkörper 18 mit einem im Hohlstutzen 15 integrierten Ventilsitz 27 in Kontakt, so daß eine Öffnung 30 des so gebildeten Ventils verschlossen ist.

Während des Betriebs strömt das zu filternde Fluid über den Einlaß 13 in eine Rohseite 28 des Filters und passiert das Filterpapier 22. Dadurch gelangt es auf eine Reinseite 29 des Filters und verläßt anschließend durch den Auslaß 14 das Filtergehäuse. Das Filtergehäuse kann z. B. zur Reinigung des Schmieröls einer nicht dargestellten Brennkraftmaschine verwandt werden. Wird der Schmierölbedarf der Brennkraftmaschine so groß, daß der durch die Rundfilterpatrone 21 erzeugte Durchflußwiderstand zu groß für eine vollständige Versorgung der Brennkraftmaschine mit Schmieröl wird, wird der Ventilkörper 18 entgegen der Federkraft des Spannmittels 19 von dem Ventilsitz 27 weggedrückt, so daß ein Kurzsschluß für das Fluid entsteht. Die benötigte zusätzliche Ölmenge für die Brennkraftmaschine fließt dann durch einen Durchgang 36 in den Hohlraum 17 und gelangt über das Ventil ungefiltert auf die Reinseite 29. Ein solcher Betriebszustand kann sich auch einstellen, wenn der Druckabfall an der Rundfilterpatrone aufgrund von Verschmutzung derselben zu stark ansteigt.

Das Filter gemäß Figur 2 ist, soweit es mit Teilen der Figur 1 übereinstimmt, durch dieselben Bezugszeichen gekennzeichnet. Es unterscheidet sich lediglich in der Befestigung des Ventilsitzes 27 und des Stützrohres 20. Das Stützrohr 20 ist mit Hilfe eine Bajonettverschlusses 31 mit dem Deckel 12 lösbar verbunden. Der Bajonettverschluß ist an Stegen 32 im Deckel angebracht, wobei die Stege die Durchgänge 36 freilassen. Die deckelseitige Abdichtung der Rundfilterpatrone 21 erfolgt auf einer radialen Sitzfläche 33 des Stützrohres 20. Der Ventilsitz 27 ist in einem Einlegeteil 34 untergebracht, welches unter Anwendung einer Dichtung 35 die Rohseite 28 von der Reinseite 29 abdichtend in der Verbindung zwischen dem Stützrohr 20 und den Stegen 32 eingespannt ist. Vor dem Einsetzen der Rundfilterpatrone 21 kann die aus dem Deckel 12 dem Stützrohr 20 und dem Ventil bestehende Einheit vormontiert werden. Diese bleibt auch bei einem Wechsel der Rundfilterpatrone im montierten Zustand.

## Patentansprüche

1. Flüssigkeitsfilter mit einer auswechselbaren Rundfilterpatrone (21),
― wobei diese in einem Gehäuse, bestehend aus einem Gehäusekörper (11) und einem Deckel (12), montiert ist,
― wobei ein Stützrohr (20) im eine Reinseite (29) des Filters bildenden Innenraum der Rundfilterpatrone (21) angeordnet ist und
― wobei ein Ventilkörper (18) mit Spannmitteln (19) derart am Stützrohr angebracht ist, daß der Ventilkörper an einem Ventilsitz (27), der eine die Reinseite (29) mit einer Rohseite (28) des Filters verbindende Öffnung (30) aufweist, anliegt,
**dadurch gekennzeichnet**, daß der Ventilsitz (27) in den Deckel (12) integriert ist.

2. Flüssigkeitsfilter nach Anspruch 1, **dadurch gekennzeichnet**, daß der Ventilsitz an einem Hohlstutzen (15) angebracht ist, der als Teil des Deckels (12) ausgebildet ist.

3. Flüssigkeitsfilter nach Anspruch 2, **dadurch gekennzeichnet**, daß die Rundfilterpatrone (21) über die deckelseitige von Endscheiben (23) dichtend mit dem Hohlstutzen (15) verbunden ist.

4. Flüssigkeitsfilter nach einem der vorherigen Ansprüche, **dadurch gekennzeichnet**, daß die aus Hohlstutzen (17) und Deckel (12) bestehende Einheit aus zwei Teilen gefertigt ist, die bleibend miteinander verbunden sind.

5. Flüssigkeitsfilter mit einer auswechselbaren Rundfilterpatrone (21),
― wobei diese in einem Gehäuse, bestehend aus einem Gehäusekörper (11) und einem Deckel (12), montiert ist,
― wobei ein Stützrohr (20) im eine Reinseite (29) des Filters bildenden Innenraum der Rundfilterpatrone (21) angeordnet ist und
― wobei ein Ventilkörper (18) mit Spannmitteln (19) derart am Stützrohr angebracht ist, daß der Ventilkörper an einem Ventilsitz (27), der eine die Reinseite (29) mit einer Rohseite (28) des Filters verbindende Öffnung (30) aufweist, anliegt,
**dadurch gekennzeichnet**, daß das Stützrohr (20) mit dem Deckel (12) verbunden ist und der Ventilsitz (27) in ein Einlegeteil (34) integriert ist, welches im Bereich der Verbindung von Stützrohr (20) und Deckel (12) fixiert ist.

6. Flüssigkeitsfilter nach Anspruch 5, **dadurch gekennzeichnet**, daß die Rundfilterpatrone (21) über die deckelseitige der Endscheiben (23) dichtend mit dem Stützrohr (20) verbunden ist.

7. Flüssigkeitsfilter nach einem der vorherigen Ansprüche, **dadurch gekennzeichnet**, daß die stutzenförmigen Aufnahmen (15, 24) derart ausgebildet sind, daß für die Demontage der deckelseitigen Endscheibe eine größere Kraft nötig ist, als für die Demontage der gehäuseseitigen.
